# EUROPÄISCHE PATENTSCHRIFT

(11) **EP 2 625 488 B1**
(45) Veröffentlichungstag und Bekanntmachung des Hinweises auf die Patenterteilung: **20.05.2015**
(21) Anmeldenummer: 11775926.6
(22) Anmeldetag: 06.10.2011
(51) Int. Cl.: G01B 21/04, G05B 19/401, G01B 5/004, B23Q 17/22

(54) **NICHTLINEAR WIRKENDE MESSVORRICHTUNG ZUR ANALYSE UND VERBESSERUNG DER JUSTAGE SPHÄRISCH WIRKENDER ORIENTIERUNGSEINRICHTUNGEN**
NON-LINEARLY ACTING MEASURING APPARATUS FOR ANALYSING AND IMPROVING THE ADJUSTMENT OF SPHERICALLY ACTING ORIENTATION DEVICES
DISPOSITIF DE MESURE NON LINÉAIRE POUR L'ANALYSE ET L'AMÉLIORATION DU RÉGLAGE DE SYSTÈMES D'ORIENTATION SPHÉRIQUE

(30) Priorität: 12.09.2011 DE 102011082529; 06.10.2010 DE 102010047716
(43) Veröffentlichungstag der Anmeldung: 14.08.2013
(73) Patentinhaber: Macaso GmbH, 08393 Meerane (DE)
(72) Erfinder: MÜGLITZ, Jörg, 08393 Meerane (DE); WÄHNER, Ralf, 09131 Chemnitz (DE)
(74) Vertreter: Gulde & Partner
(86) Internationale Anmeldenummer: PCT/EP2011/067482
(87) Internationale Veröffentlichungsnummer: WO 2012/045825

(56) Entgegenhaltungen:
- WO-A1-99/17073
- DD-A1- 257 484
- DE-A1-102007 023 585
- US-A- 5 111 590
- US-A- 5 428 446

## Beschreibung

Orientierungseinrichtungen dienen dazu, einen Körper um ein, zwei oder drei Raumachsen zu drehen und damit dessen Orientierung zu einem zweiten, in der Regel raumfest angeordneten Körper festzulegen. Diese Orientierungseinrichtungen sind manuell oder motorisch angetrieben und manuell oder numerisch gesteuert.
Für fast alle Anwendungen von Orientierungseinrichtungen in der industriellen Praxis ist es wichtig, die Lage der Achsen, um die der Körper gedreht wird, genau zu kennen. Das ist insbesondere dann wichtig, wenn die Orientierungseinrichtung den Körper um virtuelle Achsen bewegt, die Achsen nicht durch Maschinenelemente, wie Lager und Wellen, in ihrer Lage definiert sind, sondern dieselben durch Mechanismen realisiert und "virtualisiert" werden.

Bei derartigen Lösungen ist es das Ziel, den Körper um einen im Koordinatensystem der Orientierungseinrichtung festen Punkt zu drehen. Dieser Punkt heißt Werkzeugmittelpunkt oder Tool Center Point (TCP). Alle Drehachsen müssen sich schneiden und durch diesen Punkt verlaufen. Das ist naturgemäß schwer zu realisieren, da der TCP nicht sichtbar ist und sich entlang der Produktlebenszeit in seiner Lage im Koordinatensystem der Orientierungseinrichtung verändern kann. Ursachen hierfür können Verschleiß, Fehlbedienung, Kollisionen sein.

Es ist erforderlich, während der industriellen Nutzung einer Orientierungseinrichtung einer-seits in regelmäßigen Abständen und andererseits nach außergewöhnlichen Ereignissen (Werkzeugtausch, Kollision... ) die Lage des TCP zu bestimmen und gegebenenfalls zu korrigieren. Das kann auf zweierlei Arten geschehen.

Bei Gelenkarm-Industrierobotern müssen geometrische Parameter (Längen, Winkel) bestimmt werden, die die Lage des TCP im Handkoordinatensystem beschreiben. Diese müssen in die Robotersteuerung eingetragen werden und bestimmen die Parameter der robotersteuerungsinternen Transformationskette. Die Schwenkung um den TCP erfolgt dann durch das geordnete Zusammenwirken von in der Regel allen sechs zu einem Gelenkarmroboter gehörenden Antrieben. Hingegen werden bei speziellen Handgelenkmodulen, die als eigenständige Baugruppe in der Regel mit Portalrobotern kombiniert werden, Mechanismen in Form von ebenen Koppelgetrieben, Rädergetrieben, Bogenführungen und dgl. genutzt, um die Schwenkung um eine Achse des TCP mit nur einem Antrieb zu ermöglichen. An diesen Baugruppen müssen vermittels Justageelementen mechanische Parameter (Längen, Abstände, Winkel) in vergleichsweise geringfügigem Maße angepasst werden, um die physisch vorhandene Werkzeugspitze mit dem (virtuellen) TCP zur Überdeckung zu bringen.

Die grobe Position des TCP ist dabei in aller Regel bekannt, die genaue, von dieser in Größenordnungen von Millimetern bzw. Grad abweichende, ist es nicht. Es ist notwendig, die Parameter des TCP, d.h. seine Lage im Hand- oder Werkzeugkoordinatensystem, möglichst schnell, einfach und genau zu bestimmen, da davon die Qualität der ausgeführten technologischen Operationen (Schweißen, Schneiden, Kleben, Führen...) in entscheidendem Maße abhängt.

Naturgemäß sind die Handgelenke komplexe mechanische Einrichtungen, die vom Nutzer oder Servicetechniker u.U. nicht komplett zu durchschauen sind. Darüber hinaus sind deren Parameter in aller Regel nicht entkoppelt, d.h., bei einer Veränderung eines "Eingangsparameters", z.B. dem Drehen an einer Einstellschraube, verändern sich viele Ausgangsparameter, d.h. die Lage von Drehachsen im Werkzeugkoordinatensystem und ihre Lage zueinander. Es braucht also eine möglichst intelligente Unterstützung des Servicetechnikers oder Nutzers, um die Auswirkung von Justagehandlungen zu deuten oder vorhersehen zu können.

Nachfolgend soll auf bekannte Lösungen des Standes der Technik näher eingegangen werden.
Gelenkarm-Industrieroboter werden in aller Regel in Objektkoordinaten programmiert. Objektkoordinaten bedeuten dabei, dass am zu bearbeitenden Bauteil ein kartesisches Koordinatensystem aufgespannt wird und die Bewegungsprogrammierung derart erfolgt, dass in diesem Koordinatensystem Positionsbewegungen als drei Schiebungen entlang der und drei Orientierungsbewegungen als Rotationen um die Koordinatenachsen in Form von Zahlenwerten oder geteachten Punkten programmiert werden. Die Bewegung wird vom Industrieroboter dann durch ein nichtlineares Zusammenwirken aller sechs in der Regel vorhandenen Gelenkbewegungen (Roboterachsen) ausgeführt.
Besonders bei einer Änderung der Orientierung der Objektkoordinaten sind große Gelenkbewegungen erforderlich, wobei ein Punkt des Werkzeuges oder Handhabungsobjektes- der sogenannte Werkzeugmittelpunkt oder TCP- raumfest verharren muss. Je genauer dies geschieht, umso besser stimmt das steuerungsinterne Berechnungsmodell des Roboters mit der Realität überein, umso besser ist der Roboter kalibriert. Dies muss bei der Erstinbetriebnahme, bei der Neuprogrammierung, im Rahmen von Wartungszyklen und nach Kollisionen an Robotern und roboterähnlichen Maschinen gemessen und dokumentiert werden.

Zur Messung der Bewegung am TCP sind verschiedene technische Lösungen bekannt, die sich in berührungslose und berührende Verfahren unterscheiden.

Ein berührungsloses Verfahren wird in DE 101 53 049 B4 beschrieben. Eine Kugel wird am Ende der seriellen Roboter-Gelenkkette anstatt eines Werkzeuges befestigt und während der Orientierungsänderung des Roboters deren Position relativ zu einer feststehenden Vorrichtung berührungslos ermittelt, indem mit Sensoren, deren Lage in der Vorrichtung bekannt ist, Abstände zur Kugel ermittelt werden und durch explizite oder iterative Lösung eines Gleichungssystems die Raumlage der Kugel ermittelt werden kann. Die berührungslose Messung hat den Vorteil, dass aus dem Messvorgang heraus keinerlei Kräfte auf den Roboter wirken. Dadurch, dass die Sensoren nur Abstände entlang einer Richtung messen müssen sind diese vergleichsweise einfach und kostengünstig. Es ist jedoch erheblicher Vorrichtungsaufwand einerseits, Berechnungs- und Datentransferaufwand andererseits erforderlich, um ein Messergebnis zu erlangen. Darüber hinaus ist die Messkugel am Roboter zu befestigen.

Ein ähnliches Arbeitsprinzip wird in DE 195 010 94 A1 beschrieben, wobei hier die Wirkungsweise umgekehrt ist, indem die Kugel fest steht und am Handgelenk des Roboters mit einer speziellen Vorrichtung die Abstandssensoren befestigt sind. Der montage- und rechentechnische Aufwand ist mit der erstgenannten Lösung vergleichbar.

Mit Kameras oder einem nicht näher beschriebenen "Lageerfassungssensor" arbeitet die Lösung in DE 198 26 395 A1. Hierzu wird ein "Maßkörper" an der Roboterhand installiert, der bei der Bewegung des Roboters in seiner Lage analysiert wird. Mit Hilfe vergleichsweise aufwendiger Berechnungen in einer Auswerteeinheit, hier als "...Hostrechner..." bezeichnet, wird das steuerungsinterne kinematische Modell des Roboters danach verbessert. Der gerätetechnische Aufwand erhöht sich gegenüber den zwei vorgenannten Lösungen weiter, allerdings ist der Arbeitsbereich der Messanordnung fast uneingeschränkt, womit sich auch Extremstellungen des Roboters in seinem Arbeitsraum untersuchen lassen sollten.

Ein berührendes, mechanisch wirkendes Messwerkzeug wird in DD 257484 A1 beschrieben. Mit zwei Kreuzgelenken und einem schiebebeweglichen und in seiner Führung verdrehbaren Messarm wird zwischen Gestell und Roboterhandgelenk eine serielle Teilgetriebekette aufgebaut, die, mit Messaufnehmern bestückt, in der Lage ist, die Bewegung des Roboters zu analysieren. Die Vielzahl der hierzu benötigten Gelenke erfordert einerseits eine vergleichsweise aufwendige, massereiche konstruktive Gestaltung. Massekräfte wirken auf den Roboter und können das Messergebnis verfälschen. Die gesamte Einrichtung wird sich darüber hinaus nur schwer spielfrei herstellen und genau justieren lassen.

In DE 199 44 429 C2 wird eine Einrichtung zur Gewinnung von Korrekturparametern an Werkzeugmaschinen vermittels eines Messkopfes beschrieben, der eine Kugel trägt, die an drei in unterschiedlicher Richtung orientierte Messtaster gedrückt wird. Naturgemäß ist ein vergleichsweise großer Kugeldurchmesser erforderlich. Diese Vorrichtung scheint gut geeignet zum Einsatz an Werkzeugmaschinen mit Werkzeugwechselsystem zu sein, wo der Werkzeugmittelpunkt vergleichsweise weit von dessen Einspannstelle entfernt ist. Das Prinzip ist untauglich bei Werkzeugen, deren Werkzeugmittelpunkt sich in großer Nähe zum Werkzeug selbst befindet. Darüber hinaus muss die Lage der Schubrichtungen der Taster sehr genau bekannt sein, da deren eventuell vorhandener Kreuzungsabstand in die Berechnung der Korrekturparameter einfließt.

Eine autark wirkende Einrichtung zum Einmessen von Robotern und roboterähnlichen Maschinenhandgelenken umfasst DE 10 2007 023 585 B4. Orthogonal aufeinander stehende Linearachsen bilden eine serielle, dreiachsige Struktur mit vergleichsweise geringem Bewegungsbereich und gestatten eine "...praktisch spiel- und kraftfreie..." Bewegung eines Messaufnehmers. Die rotatorischen Messsysteme sind mit miniaturisierten Ritzel-Zahnstangen-Getrieben angeschlossen. Vermittels einer Kugel, die genau im Punkt des TCP am Werkzeug befestigt ist, greift dieses in eine kalottenförmige Aufnahme und geht mit der Vorrichtung während des Messzyklus eine zum Teil kraft- und zum Teil formschlüssige Verbindung ein. Es muss zumindest für den Fall, dass die Schubgelenke formschlüssig ausgeführt sind, bezweifelt werden, dass sich die Vorrichtung, wie beschrieben, komplett spielfrei und ohne merkbare elastische Verformungen benutzen lässt.

Gleiches gilt für die Ritzel-Zahnstangenpaarungen. Eher ist zu vermuten, dass die spielarme Einstellung der Gelenkpaarungen zeit- und kostenaufwendig sein wird. Das könnte sich durch die in der Anmeldung erwähnte Nutzung von stoffpaarigen Gelenken verbessern. Wie dies konstruktiv ausgeführt werden könnte wird nicht beschrieben.

Die serielle Anordnung von Bewegungsachsen wie in vorliegender Lösung ist, wie aus der Robotertechnik bekannt (Beyer, L. u.a.: Hybridkinematiken-Alleskönner zwischen Industrieroboter und Werkzeugmaschine. Uniforschung, Forschungsmagazin der Uni der Bundeswehr Hamburg, Hamburg, 2002, S.18-23), hinsichtlich Steifigkeit und Akkuratesse einer hybriden oder parallelen Anordnung der Messsysteme unterlegen. Darüber hinaus impliziert die serielle Struktur einen komplizierten konstruktiven Aufbau, von dem das Ausführungsbeispiel einen Eindruck vermittelt. Die Gewinnung der Messwerte erfolgt relativ, interne Referenzpunkte sind nicht vorhanden. Aus den gemessenen Daten kann somit nicht auf die absolute Stellung der Vorrichtung geschlossen werden, was zumindest für einen vollautomatischen Messzyklus von Nachteil ist.

Die Einrichtung in DE 10 2007 023 585 B4 liefert ein "...computerlesbares, standardisiertes Signal..." an einen Computer als Auswerteeinheit. Die gemessenen Daten werden von ihr, "...ohne dass eine Koordinatentransformation nötig ist...", in eine "...computergrafische Bildschirmdarstellung..." überführt. Dies ist eine in der industriellen Praxis weit verbreitete Methode und wird z.B. auch in DE10 2004 044 342 B4 beschrieben.

Der wie vorbeschrieben aufgezeigte Stand der Technik mit seinen Nachteilen muss daher weiterentwickelt werden.

Es ist somit Aufgabe der Erfindung, eine Vorrichtung zu schaffen, die innerhalb eines kleinen Arbeitsraumquaders mit hoher absoluter und Wiederholgenauigkeit die Ermittlung absoluter Raumkoordinaten an Punkten eines Maschinenelementes gestattet.
Die Vorrichtung soll in der Lage sein, auch unter rauen Umweltbedingungen, d.h. schlechter Zugänglichkeit des Maschinenelementes, hoher Staubbelastung und schlechten Beleuchtungsverhältnissen, zu arbeiten.
Die Vorrichtung soll ferner geeignet sein, sowohl als mobiles, autarkes, selbständiges Gerät zu arbeiten, als auch als ein integraler Bestandteil einer Bearbeitungsmaschine zu fungieren. Zur Minimierung von Gelenkspiel und elastischen Verformungen soll eine nichtserielle kinematische Struktur mit einer möglichst geringen Anzahl von Gliedern dienen. Die Ankopplung der Messeinrichtung soll so erfolgen können, dass durch eine Vorspannung immer eine Kraftwirkung in den Gelenken der Messeinrichtung besteht und Gelenkspiel auf diese Weise komplett eliminiert werden kann.

Die Aufgabe der Erfindung wird wie folgt gelöst, wobei hinsichtlich der grundlegenden erfinderischen Gedanken auf den Patentanspruch 1 verwiesen wird. Die weitere Ausgestaltung der Erfindung wird in den Patentansprüchen 2 bis 6 dargelegt.

Die Messvorrichtung besitzt ein bumerangförmiges Getriebeglied, das auf einer Gestellplatte kreuzgelenkig angeordnet ist. Das Kreuzgelenk kann form-, stoff- oder kraftschlüssig oder als Kombination zweier Gelenke, z.B. eines Kugel- und eines Kugel-Plattengelenkes, ausgebildet sein.

Das bumerangförmige Getriebeglied weist an seinen beiden Enden zwei mit ihm fest verbundene Linearmessglieder mit federbelasteten Tastern auf. Beide Taster wirken lotrecht zur vom bumerangförmigen Getriebeglied aufgespannten Ebene und in gleiche Richtung. Vermittels der von den beiden Linearmessgliedern geliefertem Sensorsignale kann die Lage des bumerangförmigen Getriebegliedes relativ zur Gestellplatte bestimmt werden.
Über eine Linearführung, die parallel zur Schubrichtung der ersten beiden Linearmessglieder wirkt, ist ein Messfinger mit dem bumerangförmigen Getriebeglied verbunden.
Ein drittes Linearmessglied gleicher Konfiguration ist ebenfalls am bumerangförmigen Getriebeglied befestigt, wirkt ebenso senkrecht zur von diesem aufgespannten Ebene, jedoch in entgegengesetzte Richtung und liefert ein dem Abstand des Messfingers vom bumerangförmigen Getriebeglied proportionales Signal.
Der Messfinger besitzt an der vom bumerangförmigen Getriebeglied abgewandten Seite eine Kalotte, in die eine Messkugel spielfrei im Sinne einer lösbaren, kugelgelenkigen Verbindung eingreift. Diese Messkugel ist Bestandteil eines Werkzeuges, das numerisch gesteuert bewegt und in seiner Orientierung verändert werden kann. Mit dem Eingriff der Messkugel in die Kalotte des Messfingers und durch die federbelasteten Taster der drei Linearmessglieder entsteht eine statisch bestimmte Gelenkkette.
Ein Messadapter übersetzt die von den drei Linearmessgliedern gelieferten Signale in Weginformationen und sendet diese über eine standardisierte Schnittstelle an einen Computer. Mittels einer nichtlinearen Vorwärtstransformation werden diese in ein kartesisches, gestellplattenfestes Koordinatensystem gewandelt und stehen zur beliebigen Weiterverarbeitung, z.B. der computergrafischen Darstellung, Archivierung, Bereitstellung im Internet usw., zur Verfügung.
Die Messeinrichtung ist vor äußeren Einflüssen, wie Staub, Hitze etc. durch Elemente, wie eine Schutzhaube und einen Faltenbalg, geschützt.

Die Erfindung soll nachfolgend an einem Ausführungsbeispiel näher erläutert werden. Dabei zeigen:

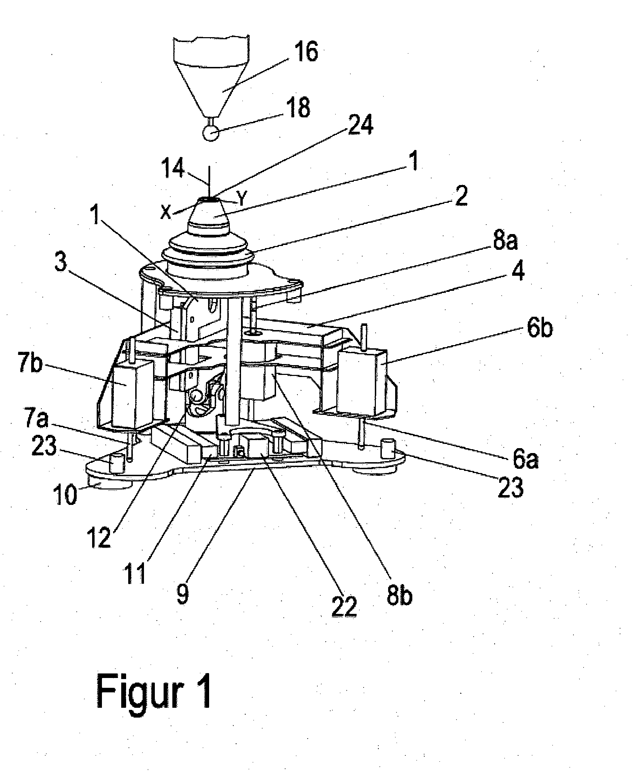

- Figur 1-: eine dreidimensionale Darstellung der Messvorrichtung mit entfernter Schutzhaube,

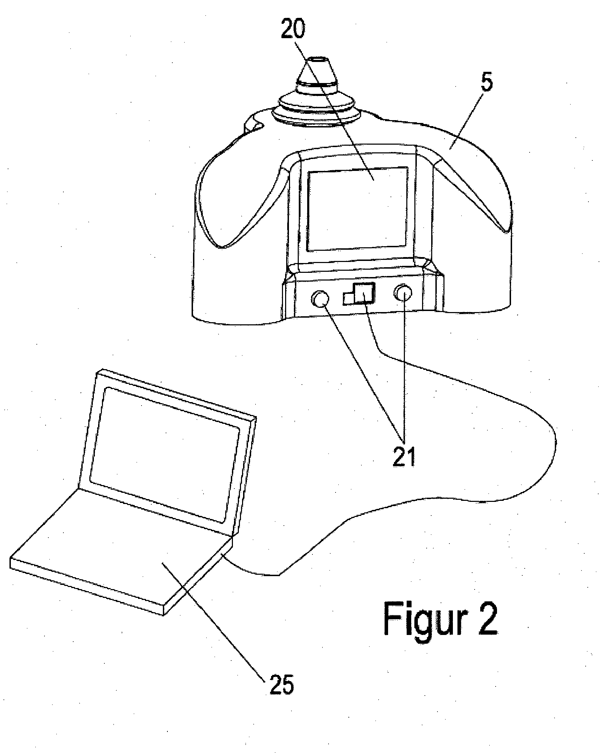

- Figur 2-: eine dreidimensionale Darstellung der Messvorrichtung mit aufgesetzter Schutzhaube,
- Figur 3-: eine schematische Darstellung der Messvorrichtung mit aufgesetztem Kopplungsstutzen,
- Figur 4-: eine schematische Darstellung des Messkopfes.

Erfindungsgemäß besteht die Messvorrichtung aus einem bumerangförmigen Getriebeglied 4, das mit der Gestellplatte 9 kreuzgelenkig verbunden ist. Das bumerangförmige Getriebeglied 4 ist in Grundstellung zur Ausdehnungsebene der Gestellplatte 9 parallel und trägt drei Linearmessglieder 6,7 und 8. Die Linearmessglieder 6 und 7 sind an den beiden Enden des bumerangförmigen Getriebegliedes 4 befestigt, reichen mit ihren Tastern 6a, 7a zur Gestellplatte 9 und bilden mit dieser jeweils ein Kugel-Plattengelenk. Dazu sind die Taster 6a, 7a an ihrem Ende kugelförmig geformt und werden kraftschlüssig auf die Gestellplatte 9 gedrückt. Das bumerangförmige Getriebeglied 4 trägt auch das Linearmessglied 8 und die Linearführung 3. Die Linearmessglieder 6,7 und 8 wirken alle entlang einer Richtung, nämlich der Normalenrichtung des bumerangförmigen Getriebegliedes 4.
Die Linearführung 3 ist mit dem Messfinger 1 verbunden, mit dem wiederum der Taster 8a des Linearmessgliedes 8 ein Kugel-Plattengelenk bildet, indem der Taster 8a an seinem Ende kugelförmig ausgeformt ist und federvorgespannt an den Messfinger 1 gedrückt wird. Der Messfinger 1 besitzt gegenüber der Gestellplatte 9 eine Beweglichkeit in allen drei Achsen eines Kugelkoordinatensystems, dessen Achskoordinaten von den Linearmessgliedern 6,7 und 8 mit kapazitivem, elektrischen, fotooptischen oder interferometrischem Messprinzip gewonnen und an den Messadapter 11 weitergeleitet werden. Die Bewegungsmöglichkeit des bumerangförmigen Getriebegliedes 4 ist durch Endanschläge 23 limitiert.
Der Messadapter 11 transformiert die Achskoordinaten mit einer nichtlinearen Vorwärtstransformation in Objektkoordinaten in einem kartesischen, gestellfesten Koordinatensystem 14 und stellt diese Objektkoordinaten zur weiteren Auswertung zur Verfügung. Dazu sind in der Schutzhaube 5 der Messvorrichtung ein Display 20 und Bedienelemente 21 angeordnet. Das Display 20 und die Bedienelemente 21 besitzen mit der Messvorrichtung eine lösbare elektrische Verbindung.
Auf dem Display 20 können die Objektkoordinaten angezeigt und kann auf diese Weise die Messvorrichtung autark betrieben werden.
Gleichzeitig kann der Messadapter 11 die Objektkoordinaten via der computerkompatiblen Schnittstelle 22 zur Weiterverarbeitung einem übergeordnetem Computersystem 25 zur Verfügung stellen. Über die computerkompatible Schnittstelle 22 wird die Messvorrichtung auch mit Energie versorgt.
Die gesamte Messvorrichtung wird von der Schutzhaube 5 umschlossen und geschützt. Die Verbindung zwischen dem Messfinger 1 und der Schutzhaube 5 stellt ein flexibler Schutzbalg 2 her. Standfüße 10 mit bevorzugt permanentmagnetischer Kraftwirkung sorgen für einen sicheren Stand der Messvorrichtung.

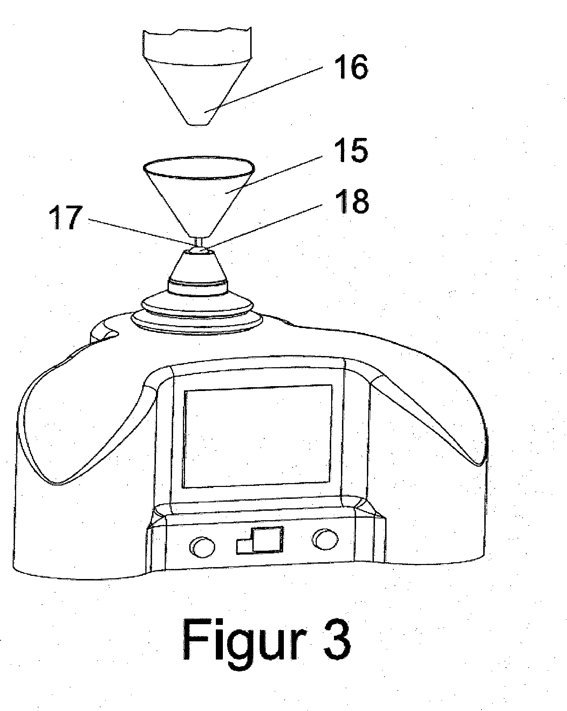

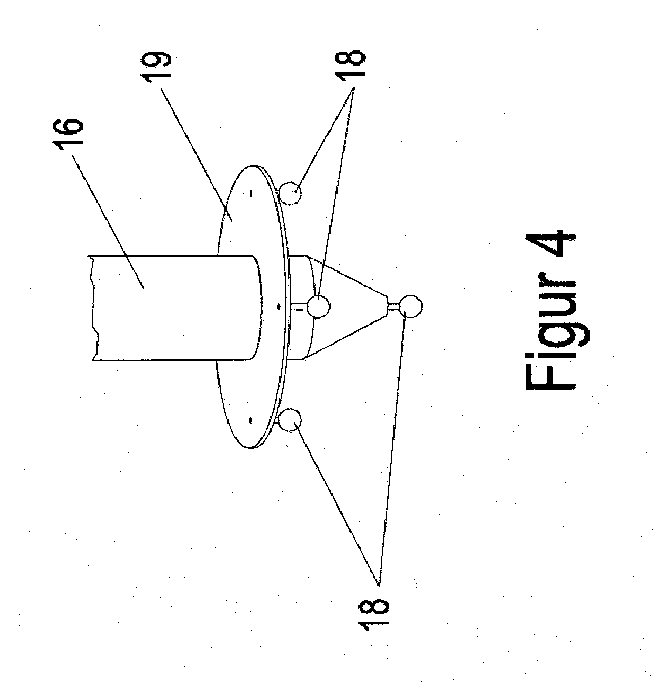

In den Messfinger 1 greift vermittels einer Messkugel 18 ein in der Regel rotationssymmetrisches, schwenkbewegliches Werkzeug 16 ein. Der Mittelpunkt der Messkugel 18 befindet sich in der Symmetrieachse des schwenkbeweglichen Werkzeuges 16. Er muss sich nicht im Werkzeugmittelpunkt (TCP) 17 des schwenkbeweglichen Werkzeuges 16 befinden und darf zu diesem einen kleinen, allerdings definierten Abstand besitzen.
Der Messfinger 1 ist an seiner Oberseite kugelkalottenförmig geformt und wird federvorgespannt gegen die Messkugel 18 gedrückt. Wird nun das schwenkbewegliche Werkzeug 16 verschwenkt kann die Messvorrichtung die Bewegung der Messkugel 18 aufnehmen und diese Bewegung punktweise zu Objektkoordinaten im kartesischen, gestellfesten Koordinatensystem 14 transformieren.
Um zu vermeiden, dass die Messkugel 18 zunächst an das schwenkbewegliche Werkzeug 16 angebracht werden muss wird entsprechend Figur 3 vorgeschlagen, anstatt der Messkugel einen Kopplungsstutzen 15 mit dem Messfinger 1 kugelgelenkig zu verbinden. Der Kopplungsstutzen 15 ist so ausgeformt, dass er eine Kegelform und die Negativform des schwenkbeweglichen Werkzeuges 16 besitzt, das schwenkbewegliche Werkzeug 16 in diesen eintaucht und durch eine Kombination von Kraft- und/oder Formschluss das schwenkbewegliche Werkzeug 16 vorübergehend mit dem Kopplungsstutzen 15 verbunden ist. Durch eine Rückzugsbewegung des schwenkbeweglichen Werkzeuges in positive z-Richtung des kartesischen, gestellfesten Koordinatensystems kann diese Verbindung jederzeit gelöst werden.
Zur Ermittlung der Orientierung des schwenkbeweglichen Werkzeuges 16 wird entsprechend Figur 4 ein speziell ausgebildeter Messkopf 19 mit dem schwenkbeweglichen Werkzeug 16 verbunden. Der Messkopf 19 trägt zumindest drei, sich nicht in der Symmetrieachse des schwenkbeweglichen Werkzeuges 16 befindliche Messkugeln 18, die sich in einer zur Symmetrieachse des schwenkbeweglichen Werkzeuges 16 bekannten, bevorzugt lotrechten Lage befindet. Die Abstände der Mittelpunkte der Messkugeln 18 sind bekannt. Durch eine entsprechende Bewegung des schwenkbeweglichen Werkzeuges 16 werden nacheinander die Messkugeln 18 mit dem Messfinger 1 in Eingriff gebracht und kann durch die Verrechnung der für jede Messkugel 18 gewonnenen Messwerte eine Lage der Symmetrieachse des schwenkbeweglichen Werkzeuges 16 ermittelt werden.

### Bezugszeichenliste

- 1: Messfinger
- 2: flexibler Schutzbalg
- 3: Linearführung
- 4: bumerangförmiges Getriebeglied
- 5: Schutzhaube
- 6: Linearmessglied 1
- 6a: Taster 1
- 6b: Gehäuse 1
- 7: Linearmessglied 2
- 7a: Taster 2
- 7b: Gehäuse 2
- 8: Linearmessglied 3
- 8a: Taster 3
- 8b: Gehäuse 3
- 9: Gestellplatte
- 10: Standfuß
- 11: Messadapter
- 12: Kreuzgelenk
- 14: kartesisches, gestellfestes Koordinatensystem
- 15: Kopplungsstutzen
- 16: schwenkbewegliches Werkzeug
- 17: Werkzeugmittelpunkt(TCP)
- 18: Messkugel
- 19: Messkopf
- 20: Display
- 21: Bedienelemente
- 22: computerkompatible Schnittstelle
- 23: Endanschläge
- 24: kalottenförmige Ausformung
- 25: übergeordnetes Computersystem

## Patentansprüche

1. Nichtlinear wirkende Messvorrichtung zur Analyse und Verbesserung der Justage sphärisch wirkender Orientierungseinrichtungen, durch eine computerkompatible Schnittstelle (22) mit Energie versorgt, ortsbeweglich oder fest an einer Maschine installiert, zur schnellen und einfachen Analyse kleiner Relativbewegungen eines gegenüber einer Gestellplatte (9) schwenkbeweglichen, rotationssymmetrisches Werkzeuges (16), indem eine zeitweise wirksame, lösbare, bewegliche, in Kombination von Kraft- und Formschluss wirkende, mechanische Verbindung zwischen der Gestellplatte (9) und dem schwenkbeweglichen Werkzeug (16) mit Hilfe einer Messkugel (18) hergestellt wird, **gekennzeichnet dadurch, dass** ein Messfinger (1) als Teil der Messvorrichtung in drei Achsen eines Kugelkoordinatensystems beweglich ist und dass jeder der drei Achsen dieses Kugelkoordinatensystems ein Linearmessglied (6), (7), (8), bestehend jeweils aus einem Gehäuse (6b), (7b), (8b) und einem Taster (6a), (7a), (8a), zugeordnet ist, die ein die jeweilige Achsposition des Kugelkoordinatensystems eineindeutig abbildendes, bevorzugt elektrisches Messsignal bereitstellen, dass ein bumerangförmiges Getriebeglied (4) im Inneren der Messvorrichtung angeordnet ist, welches mit der Gestellplatte (9) kreuzgelenkig verbunden und lotrecht zu seiner Ausdehnungsebene mit einer Linearführung (3) linearbeweglich mit dem Messfinger (1) verbunden ist, dass alle drei Gehäuse der Linearmessglieder (6b), (7b), (8b) mit dem bumerangförmigen Getriebegliedes (4) und untereinander starr verbunden sind, dass ein flexibler Schutzbalg (2) den staubdichten Verschluss zwischen dem Messfinger (1) und der Gestellplatte (9) herstellt und über den flexiblen Schutzbalg (2) und die Gestellplatte (9) eine Schutzhaube (5) gestülpt ist, dass die Messkugel (18) in der Symmetrieachse des schwenkbeweglichen, rotationssymmetrischen Werkzeuges (16) und zumindest in der Nähe seines Werkzeugmittelpunktes (17) angeordnet und der Abstand zwischen dem Mittelpunkt der Messkugel (18) und dem Werkzeugmittelpunkt (17) bekannt ist, dass das schwenkbewegliche, rotationssymmetrische Werkzeug (16) mit der Messkugel (18) in eine kalottenförmige Ausformung (24) an der Oberseite des Messfingers (1) eintaucht und mit dem Messfinger (1) ein praktisch spielfreies Kugelgelenk bildet, dass der Durchmesser der Messkugel (18) klein ist im Verhältnis zum Bewegungsbereich der kalottenförmigen Ausformung (24), dass die drei, von den Linearmessgliedern (6), (7), (8) bereitgestellten, bevorzugt elektrischen Messsignale in einen Messadapter (11) übertragen werden, in der diese in eine digitale Form gewandelt, in eine Wegkoordinate übersetzt und dann mit Hilfe einer nichtlinearen, singularitätsfreien Vorwärtstransformation in Geometriedaten gewandelt werden, die die Bewegung des Werkzeugmittelpunktes (17) im kartesischen, gestellfesten Koordinatensystem (14) beschreiben, die im Messadapter (11) gespeichert sind und an der computerkompatiblen Schnittstelle (22) als Datenstrom zur beliebigen Weiterverarbeitung in einem übergeordneten Computersystem (25) zur Verfügung stehen.

2. Nichtlinear wirkende Messvorrichtung nach Anspruch 1, **gekennzeichnet dadurch, dass** die kreuzgelenkige Verbindung des bumerangförmigen Getriebegliedes (4) mit der Gestellplatte (9) mit einem Kreuzgelenk (12) oder einem stoffschlüssigen Gelenk, z.B. einem Metallbalg, einem Biegebalken oder zwei nacheinander angeordneten, ebenen Plattengelenken oder mit einem kraftschlüssigen Gelenk, dessen Zusammenhalt durch die Wirkung von Vakuum oder Magnetkräften entsteht, erfolgt.

3. Nichtlinear wirkende Messvorrichtung nach den Ansprüchen 1, **gekennzeichnet dadurch, dass** die Verbindung der Taster (6a), (7a), (8a) der Linearmessglieder (6), (7), (8) mit den anschließenden Getriebegliedern über kraftschlüssige Kugel-Plattengelenke erfolgt.

4. Nichtlinear wirkende Messvorrichtung nach einem der vorgenannten Ansprüche, **gekennzeichnet dadurch, dass** zur Herstellung der kugelgelenkigen Verbindung zwischen dem schwenkbeweglichen, rotationssymmetrischen Werkzeug (16) und dem Messfinger (1) ein Kopplungsstutzen (15) genutzt wird, der kalottenformähnlich ausgebildet ist und mit dem Messfinger (1) ein unlösbares Kugelgelenk bildet, dass das schwenkbewegliche Werkzeug (16) in den Kopplungsstutzen (15) eintauchen kann und durch eine der Messvorrichtung entstammende Kraftwirkung in Richtung des schwenkbeweglichen Werkzeuges (16) und durch eine Form des Kopplungsstutzens (15), der der Negativform des schwenkbeweglichen Werkzeuges (16) entspricht, eine vorübergehend starre; jedoch jederzeit durch Bewegung des schwenkbeweglichen Werkzeuges (16) in positive z-Richtung des kartesischen, gestellfesten Koordinatensystems (14) lösbare Verbindung zwischen Kopplungsstutzen (15) und schwenkbeweglichem, rotationssymmetrischem Werkzeug (16) hergestellt wird und dass der Kopplungsstutzen (15) bei nicht eingetauchtem schwenkbeweglichen Werkzeug (16) durch die Wirkung von Federkräften sich mit seiner Symmetrieachse in die Flucht der Symmetrieachse des Messfingers (1) stellt.

5. Nichtlinear wirkende Messvorrichtung nach den Ansprüchen 1 oder 4, **gekennzeichnet dadurch, dass** zur Bestimmung der Orientierung des schwenkbeweglichen, rotationssymmetrischen Werkzeuges (16) in Nullstellung dieses mit einem Messkopf (19) versehen wird, der außerhalb der Symmetrieachse des schwenkbeweglichen, rotationssymmetrischen Werkzeuges (16) in definiertem Abstand und in einer zur Symmetrieachse in ihrer Lage bekannten Ebene mindestens drei Messkugeln (18) trägt, die durch eine Bewegung des schwenkbeweglichen, rotationssymmetrischen Werkzeuges (16) nacheinander in den Messfinger (1) eintauchen und durch Nutzung der im kartesischen, gestellfesten Koordinatensystem (14) gemessenen Z-Koordinaten die Lage der Symmetrieachse des schwenkbeweglichen, rotationssymmetrischen Werkzeuges (16) im kartesischen, gestellfesten Koordinatensystem (14) bestimmt wird.

6. Nichtlinear wirkende Messvorrichtung nach einem der vorgenannten Ansprüche, **gekennzeichnet dadurch, dass** die Messvorrichtung ohne Verbindung zu einem übergeordneten Computersystem (25) batteriegepuffert autark verwendet werden kann, indem der Messadapter (11) mit einer Eigenintelligenz die in ihm gespeicherten Daten in geeigneter Form auf einem Display (20) darstellen kann und an der Messvorrichtung vorhandene Bedienelemente (21) der Interaktion mit dem Bediener dienen.

## Claims

1. A non-linearly acting measuring apparatus for analysing and improving the adjustment of spherically acting orientation devices, supplied with energy through a computer-compatible interface (22), installed either in a positionally movable manner or fixed to a machine, for the rapid and simple analysis of small relative movements of a rotationally symmetric tool (16) which can be pivoted relative to a frame plate (9), using a measuring sphere (18) to make a temporarily effective, detachable, movable, mechanical connection, effected by a combination of force-fit and form-fit engagement, between the frame plate (9) and the pivotable tool (16), **characterized in that** a measuring finger (1), which is part of the measuring apparatus, can be moved in three axes of a sphere coordinate system, and that each of the three axes of said sphere coordinate system is assigned a linear measuring member (6), (7), (8), each consisting of a housing (6b), (7b), (8b) and a stylus (6a), (7a), (8a), which provide a, preferably electrical, measurement signal representing the respective position of the axis of the sphere coordinate system in a completely unambiguous manner, that a boomerang-shaped transmission member (4) is arranged inside the measuring apparatus, which transmission member is connected to the frame plate (9) by means of a universal joint and is connected, at right angles to its plane of extension, to the measuring finger (1) in a linearly movable manner by means of a linear guide (3), that all three housings of the linear measuring members (6b), (7b), (8b) are rigidly connected to the boomerang-shaped transmission member (4) and to each other, that the dust-tight closure between the measuring finger (1) and the frame plate (9) is achieved by means of flexible protective bellows (2) and a protective cap (5) is arranged so as to cover the flexible protective bellows (2) and the frame plate (9), that the measuring sphere (18) is arranged in the axis of symmetry of the pivotable, rotationally symmetric tool (16) and at least near its tool centre point (17) and the distance between the centre point of the measuring sphere (18) and the tool centre point (17) is known, that the pivotable, rotationally symmetric tool (16), together with the measuring sphere (18), is introduced in a dome-shaped recess (24) on the upper side of the measuring finger (1), thus forming a virtually play-free ball-and-socket joint with the measuring finger (1), that the diameter of the measuring sphere (18) is small compared to the scope for movement provided by the dome-shaped recess (24), that the three, preferably electrical, measurement signals provided by the linear measuring members (6), (7), (8) are transmitted into a measurement adapter (11) which converts them into a digital form, translates them into a distance coordinate and then performs a non-linear, singularity-free forward transformation to convert them into geometric data describing the movement of the tool centre point (17) within the Cartesian coordinate system (14) which is fixed relative to the frame, which data is stored in the measurement adapter (11) and is available at the computer-compatible interface (22) as a data stream for any desired further processing in a higher-level computer system (25).

2. The non-linearly acting measuring apparatus according to claim 1, **characterized in that** the universal-joint connection of the boomerang-shaped transmission member (4) to the frame plate (9) is made by means of a universal joint (12) or a single-piece joint, e.g. metal bellows, a deflecting beam or two planar plate joints arranged one after the other or by means of a force-fit joint which is held together due to the action of a vacuum or magnetic forces.

3. The non-linearly acting measuring apparatus according to the claims 1, **characterized in that** the connection of the styli (6a), (7a), (8a) of the linear measuring members (6), (7), (8) to the adjacent transmission members is made by means of force-fit ball-and-plate joints.

4. The non-linearly acting measuring apparatus according to any one of the preceding claims, **characterized in that** the ball-and-socket joint connection between the pivotable, rotationally symmetric tool (16) and the measuring finger (1) is made using a coupling piece (15) which has a dome-like shape and forms a non-detachable ball-and-socket joint with the measuring finger (1), that the pivotable tool (16) can be introduced in the coupling piece (15) and, due to a force originating from the measuring apparatus and acting towards the pivotable tool (16) and due to a shape of the coupling piece (15) corresponding to the negative shape of the pivotable tool (16), a connection between the coupling piece (15) and the pivotable, rotationally symmetric tool (16) is made, which connection is temporarily rigid but can be detached at any time by moving the pivotable tool (16) in the positive z direction of the Cartesian coordinate system (14) which is fixed relative to the frame, and that, when the pivotable tool (16) is not introduced, the axis of symmetry of the coupling piece (15) is moved so as to be aligned with the axis of symmetry of the measuring finger (1) due to the action of spring forces.

5. The non-linearly acting measuring apparatus according to claims 1 or 4, **characterized in that**, in order to determine the orientation of the pivotable, rotationally symmetric tool (16) in its zero position, said tool is provided with a measuring head (19) carrying at least three measuring spheres (18) outside the axis of symmetry of the pivotable, rotationally symmetric tool (16) at a defined distance and in a plane the position of which relative to the axis of symmetry is known, which measuring spheres are introduced in the measuring finger (1) one after the other due to a movement of the pivotable, rotationally symmetric tool (16), and the position of the axis of symmetry of the pivotable, rotationally symmetric tool (16) within the Cartesian coordinate system (14) which is fixed relative to the frame is determined using the Z coordinates measured in the Cartesian coordinate system (14) which is fixed relative to the frame.

6. The non-linearly acting measuring apparatus according to any one of the preceding claims, **characterized in that** the measuring apparatus can be used as a battery-buffered, stand-alone unit without connection to a higher-level computer system (25) thanks to the facts that the measurement adapter (11) with built-in intelligence is able to display the data stored in it on a display (20) in a suitable form and operating elements (21) provided on the measuring apparatus serve for interaction with the operator.

## Revendications

1. Dispositif de mesure non linéaire pour l'analyse et l'amélioration du réglage de systèmes d'orientation sphérique, alimenté en énergie par une interface (22) compatible avec un ordinateur, installé de façon mobile ou de façon fixe sur une machine, pour l'analyse rapide et simple de petits déplacements relatifs d'un outil (16) symétrique en rotation pivotant par rapport à une platine (9), par le fait qu'un raccordement mécanique temporairement efficace, détachable, agissant selon une combinaison de liaison de force et de forme, entre la platine (9) et l'outil (16) pivotant est réalisé à l'aide d'une bille de mesure (18), **caractérisé en ce qu'**un doigt de mesure (1) est, en tant que dispositif de mesure, mobile dans trois axes d'un système de coordonnées sphérique, et **en ce qu'**à chacun des trois axes de ce système de coordonnées sphérique est affecté un organe de mesure linéaire (6), (7), (8), composé respectivement d'un boîtier (6b), (7b), (8b) et d'un palpeur (6a), (7a), (8a) qui fournissent un signal de mesure, de préférence électrique, reproduisant de façon univoque la position des axes respective du système de coordonnées sphérique, **en ce qu'**un organe de transmission (4) en forme de boumerang est disposé l'intérieur du dispositif de mesure et est raccordé à la platine (9) de façon articulée en croix et est, perpendiculairement à son plan d'étendue, raccordé par un guidage linéaire (3) d'une façon linéairement mobile au doigt de mesure (1), **en ce que** les trois boîtiers des organes de mesure linéaire (6b), (7b), (8b) sont tous raccordés de façon rigide à l'organe de transmission (4) en forme de boumerang et les uns aux autres, **en ce qu'**un soufflet de protection (2) flexible réalise la fermeture, étanche à la poussière, entre le doigt de mesure (1) et la platine (9), et **en ce qu'**un capot de protection (5) est emmanché sur le soufflet de protection (2) flexible et la platine (9), **en ce que** la bille de mesure (18) est disposée dans l'axe de symétrie de l'outil (16) symétrique en rotation pivotant et au moins à proximité de son point central d'outil (17), et **en ce que** l'écart entre le point central de la bille de mesure (18) et le point central d'outil (17) est connu, **en ce que** l'outil (16) symétrique en rotation pivotant plonge avec la bille de mesure (18) dans une formation (24) en forme de calotte sur le côté supérieur du doigt de mesure (1) et forme avec le doigt de mesure (1) une articulation à rotule pratiquement sans jeu, **en ce que** le diamètre de la bille de mesure (18) est petit par rapport à la zone de déplacement de la formation (24) en forme de calotte, **en ce que** les trois signaux de mesure, de préférence électriques, fournis par les organes de mesure linéaire (6), (7), (8) sont transmis dans un adaptateur de mesure (11) dans lequel ceux-ci sont convertis en forme numérique, traduits en une coordonnée de course et puis convertis, à l'aide d'une opération de transformation directe non linéaire exempte de singularité, en données géométriques qui décrivent le déplacement du point central d'outil (17) dans le système de coordonnées (14) cartésien solidaire du bâti, qui sont enregistrées dans l'adaptateur de mesure (11) et sont mises à disposition sur l'interface (22) compatible avec un ordinateur en tant que flux de données pour un traitement complémentaire quelconque dans un système d'ordinateur (25) supérieur.

2. Dispositif de mesure non linéaire selon la revendication 1, **caractérisé en ce que** le raccordement articulé en croix de l'organe de transmission (4) en forme de boumerang à la platine (9) s'effectue avec une articulation croisée (12) ou une articulation par liaison de matière, par exemple un soufflet métallique, une barre de flexion ou deux articulations à platine planes disposées l'une derrière l'autre ou un avec une articulation par liaison de force dont la cohésion est suscitée par l'action du vide ou de forces magnétiques.

3. Dispositif de mesure non linéaire selon la revendication 1, **caractérisé en ce que** le raccordement des palpeurs (6a), (7a), (8a) des organes de mesure linéaire (6), (7), (8) avec les organes de transmission qui suivent s'effectue par le biais d'articulations à rotule-platine par liaison de force.

4. Dispositif de mesure non linéaire une des revendications précédentes, **caractérisé en ce que**, pour la réalisation du raccordement par articulation à rotule entre l'outil (16) symétrique en rotation pivotant et le doigt de mesure (1), il est utilisé une tubulure d'accouplement (15) qui est constituée de façon semblable à la forme d'une calotte et qui forme avec le doigt de mesure (1) une articulation à rotule non détachable, **en ce que** l'outil (16) pivotant peut plonger dans la tubulure d'accouplement (15) et **en ce que**, par une action de force en provenance du dispositif de mesure et dirigée vers l'outil (16) pivotant, et par une forme de la tubulure d'accouplement (15) qui correspond à la forme négative de l'outil (16) pivotant, il est établi un raccordement provisoirement rigide, mais détachable à tout moment par le déplacement de l'outil (16) pivotant dans la direction z positive du système de coordonnées (14) cartésien solidaire du bâti, entre la tubulure d'accouplement (15) et l'outil (16) symétrique en rotation pivotant, et **en ce que** la tubulure d'accouplement (15), quand l'outil (16) pivotant n'est pas en plongée, s'aligne, avec son axe de symétrie, sur l'axe de symétrie du doigt de mesure (1) sous l'action de forces de ressort.

5. Dispositif de mesure non linéaire selon les revendications 1 ou 4, **caractérisé en ce que**, pour la définition de l'orientation de l'outil (16) symétrique en rotation pivotant dans la position zéro, celui-ci est muni d'une tête de mesure (19) qui porte, à l'extérieur de l'axe de symétrie de l'outil (16) symétrique en rotation pivotant, à une distance définie et dans un plan dont la position est connue par rapport à l'axe de symétrie, au moins trois billes de mesure (18) qui, par une déplacement de l'outil (16) symétrique en rotation pivotant, plongent l'une après l'autre dans le doigt de mesure (1) et, par l'utilisation des coordonnées Z mesurées dans le système de coordonnées (14) cartésien solidaire du bâti, la position de l'axe de symétrie de l'outil (16) symétrique en rotation pivotant est définie dans le système de coordonnées (14) cartésien solidaire du bâti.

6. Dispositif de mesure non linéaire selon une des revendications précédentes, **caractérisé en ce que** le dispositif de mesure peut être utilisé en autarcie, alimenté par batterie, sans raccordement à un système d'ordinateur (25) supérieur par le fait que l'adaptateur de mesure (11), avec une intelligence propre, peut représenter sur un écran (20) les données qu'il contient en mémoire, sous une forme appropriée, et par le fait que des éléments de commande (21) présents sur le dispositif de mesure servent à l'interaction avec l'opérateur.
